Europäisches Patentamt

(19) European Patent Office

Office européen des brevets

(11) Publication number : **0 356 057 B1**

(12) **EUROPEAN PATENT SPECIFICATION**

(45) Date of publication of patent specification :
02.12.92 Bulletin 92/49

(51) Int. Cl.⁵ : **F16L 55/02, F16K 47/02**

(21) Application number : **89308000.2**

(22) Date of filing : **07.08.89**

(54) **Noise limiter.**

(30) Priority : **20.08.88 GB 8819838**

(43) Date of publication of application :
**28.02.90 Bulletin 90/09**

(45) Publication of the grant of the patent :
**02.12.92 Bulletin 92/49**

(84) Designated Contracting States :
**DE ES FR GB IT**

(56) References cited :
**DE-B- 1 267 482**
**FR-A- 2 295 330**
**FR-A- 2 552 849**
**US-A- 3 480 040**

(56) References cited :
**PATENT ABSTRACTS OF JAPAN, vol. 7, no.
183 (M-235)[1328], 12th August 1983; & JP-A-58
84 275 (MATSUSHITA DENKI SANGYOK.K.)
20-05-1983**

(73) Proprietor : **EATON S.A.M.**
**17 Avenue Prince Héréditaire Albert**
**MC-98000 Monaco (MC)**

(72) Inventor : **Buffet, Eric**
**Immeuble les Oliviers Avenue des Papalins
48105**
**MC-Monaco (MC)**

(74) Representative : **Douglas, John Andrew
Eaton House Staines Road
Hounslow Middlesex TW4 5DX (GB)**

EP 0 356 057 B1

## Description

This invention relates to a combination comprising a fluid valve having an upstream flow regulator, especially in its input conduit. Often the presence of the flow regulator generates unpleasant noise in the regulated fluid flow. particularly is this noise unpleasant when the regulator is of the type being an insert, which mechanically responds to increased pressure in liquid entering the conduit, such as would tend to increase flow rates, by altering its shape in a progressively flow-impeding manner.

According to GB-A-2 147 431, noise is reduced by having a passageway of somewhat restricted cross-section downstream of a manually operated flow regulator, such that (1) a chamber of intermediate pressure is created. An automatic flow regulation is not considered.

The passageway cross-section cannot be unduly restricted, perhaps because the intermediate pressure zone or chamber will be at too high a pressure. The restriction is provided by means of an insert in the valve conduit itself, preferably of synthetic plastics materials. According to a refinement, the insert may also provide an orifice which decreases in response to increased pressures.

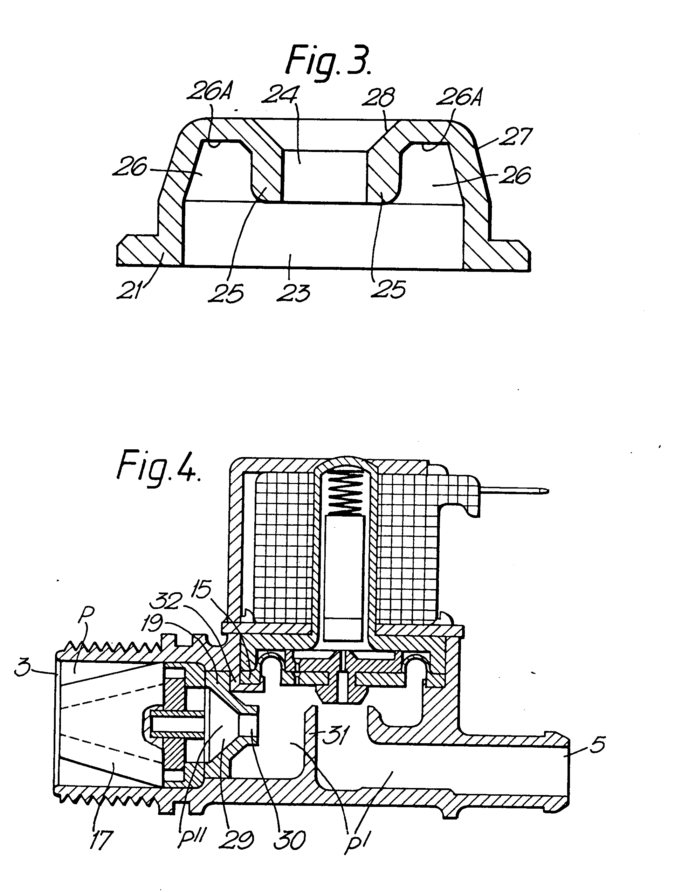

It is believed that, although logically the skilled man might expect a venturi cone-shaped tapered-down formation or insert to be the most effective at noise reduction, such a shape tends in fact to be less effective than a shape (e.g. that of Fig. 3) which allows greater volume of the intermediate pressure chamber, perhaps because fluid remains longer in the chamber, perhaps because fluid remains longer in the chamber. Indeed, a preferred shape tends to reflect the flow back, and to constrain or trap the liquid in the intermediate chamber (20) from readily entering the flow out of the intermediate chamber, in that a re-entrant blind channel (26) is provided. The constraint then may be a central boss portion 25 on a transverse (therefore reflecting) wall section 26A of the insert, the boss portion having a tubular bore passage (24), which constitutes the flow outlet of the intermediate chamber. US-A-3 480 040 provides a tapered down conduit stream downstream of a flow regulator, but the taper receives the distorted portions of the latter, and this reference is not at all concerned with reducing noise or turbulence.

It is well known that sharp changes in the geometry of a flow passage cause abrupt changes in fluid pressures, whereby turbulent, or even cavitational, flows can result. Cure for resulting noise can be to arrange the pressure changes in small steps, or progressively. GB-A-2 147 431 proposes inserts in order to quieten liquid noise originating either from a thermostatically controlled valve, or upstream of it. The inserts proposed in this reference each have a restricted passage, but it tends to be very long and the teaching is, indeed, based on its length; such length preventing in all embodiments the provision of the progressive geometrical changes constituting one of the more important fundamentals of the present invention. The inserts of this reference may help the problem described, but would certainly not be satisfactory for the high noise levels generated when the input pressures are very high, because then the aperture(s) of pressure-responsive flow regulators become compensatingly small, and the actual abruptness of the drop in pressure correspondingly high, introducing turbulence and cavitation.

The invention aims to adapt the devices of US-A-3 480 040 to reduction of pressure-responsive flow regulator generated noise, and proposes Claim 1.

Even with the benefits of the invention, when the flow regulator is followed by a gradedly apertured insert and an on-off valve as prescribed, the fluid pressure drop for very high applied pressures may be disproportionate at the flow regulator stage. The benefits of the invention are more fully realised, according to an option, when the noise-reducing insert also responds in shape, and so the size of the restricted aperture becomes smaller in response to the pressure (by use of appropriate materials and contouring of the immediate surrounds of the restricted aperture, to give it a variable constrictive effect). The extra pressure drops, engendered by response of the flow regulator, are then proportioned between it and the said restricted passageway.

Although noise reduction in fluids has been variously compensated for in the prior art, as aforementioned, domestic washing machines can create really excessive noises when filling up due to the aforementioned flow regulatory devices installed, since constant flow is demanded therein in order to make timed functions more uniform. Although flow regulators have been known since 1965, or before, in washing machines, the noise consequences have remained unsolved, it is believed, until the present invention.

Embodiments of the invention will now be described in conjunction with the drawings, in which

Fig 1 shows in cross-section a water valve without noise reduction by the invention;

Figs 2 and 4 show the same type of valve with flow restrictor inserts of two different shapes to promote flow noise reduction; and

Fig 3 shows a flow restrictor before insertion.

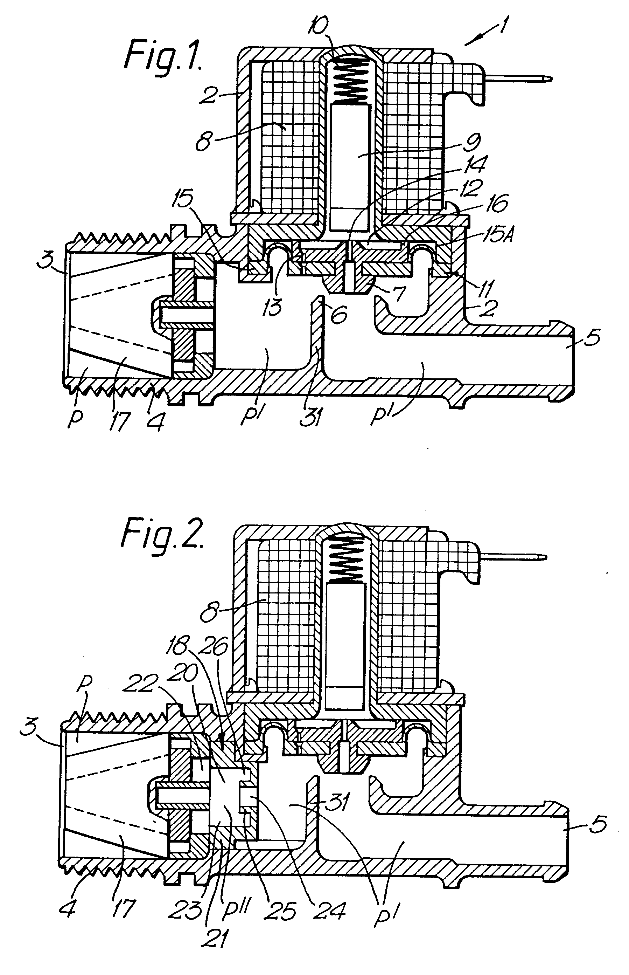

Referring to Fig 1, a two-port valve 1 has a body 2 providing an input port 3, an input conduit 4, an output port 5, a valve seat 6 and a valve flap 7 which can be lowered from the position shown, to obstruct seat 6. When unobstructed, seat 6 permits fluid flow between ports 3 and 5 via input conduit 4.

The valve flap 7 may be raised electromagnetically by the action of a solenoid coil 8 on an armature 9 coupled to the flap. Lowering the flap to a closing position would be by allowing the armature 9 to fall by gravity and/or pressure of a compression spring 10. Preferably this action is of the well-known indirect type, in that the flap is attached to a diaphragm 11 which seals off a pilot chamber 12 above it, except that there is a small bleed hole 13 eccentrically, and a slightly less small pilot hole 14 centrally, in the diaphragm. The diaphragm is clamped around its periphery 15 and has an annular thinner flexible portion 16 to allow easy raising and lowering of the flap 7 which it carries.

The pilot action is well-known, i.e. when armature 9 and flap 7 are down, pilot hole 14 is obstructed, closure being assisted by the action of the spring 10. To avoid excessive electromagnetic force requirements, the spring need not be very strong because water forces are nearly balanced on the diaphragm. The closed position is stable, and valve seat 6 is likewise blocked.

If the armature is raised by energising the solenoid, the pilot hole 14 is unblocked, and there is net water flow out of pilot chamber 12 because bleed hole 13 cannot replenish the chamber. Water forces urge the diaphragm upwards, seat 6 is unblocked, and water flows from input port 3 to output port 5.

The valve is thus opened mostly by the fluid pressure, rather than the solenoid power. A rigid round tray-shaped insert 15A may provide (a) stiffening, (b) the valve flap 7, and (c) a raised annulus 16 to limit the raising of the flap and reclosure of hole 14 against the armature.

Such mechanisms especially, in combination with an input flow regulator 17 in input conduit 4 can, as aforesaid, create undesirable noise. A possible reason for the often excessive noise is the distortion that takes place in regulator 17 when input pressure is high, which mechanically constricts the flow to bring about its regulation function. Approximately expressed, and assuming a predictability in a resulting turbulent flow downstream of regulator 17, the noise may be dependent on 2.g.h where g is gravity and h is the pressure difference (in height of water) across the flow regulator (1 bar = 10 metres of water). This expression will vary with the input pressure so that the noise generated is not constant, there is probably a threshold of input P before substantial noise is generated, and varying noises are more intrusive to the human ear than constant noises are.

The invention proposes removal or reduction of such noise by a restricted passageway e.g. by the insert 18 of Fig 2 or 3 or the insert 19 of Fig 4 downstream of the flow regulator 17. The restriction should be preferably, for the best noise damping, spaced or extensive somewhat downstream from the noise regulator, to provide an intermediate chamber 20 of pressure P″, intermediate the pressures P at the input port 3 and P′ at the output port 5.

The insert 18 (see also Fig 3) may have a peripheral flange 21 to hold it in place, a cylindrical axial passage 23 somewhat smaller in diameter than the exit passage 22 of the flow regulator 17, a yet smaller cylindrical axial passage 24 downstream of passage 23 and provided through a boss portion 25. The boss portion also forms an annular re-entrant blind channel 26 around the boss, which traps fluid and is believed to assist the sound-deadening. Blind channel 26 also enables the intermediate chamber 20 to have a somewhat larger volume than the venturi cone below. Probably the larger the volume, the better the noise reduction, up to some limit.

Referring to Fig 3, the insert 18 of Fig 2 may alternatively have the initial shape shown in Fig 3, in which the exterior portion 27 is tapered down somewhat in the downstream direction; the internal boss part 28 of boss 25 may be flared towards the downstream.

An alternative insert 19 is shown in Fig 4, in which the intermediate chamber 29 at intermediate pressure P″, is now arranged to have a conical shape, rather than the cylinder 23 and re-entrant chamber 26 shape exhibited in Figs 2 and 3. An axially short cylindrical passage 30 of yet smaller, restricted diameter, similar to that referenced 24 within boss portion 25 of Fig 2, follows downstream of the conical intermediate chamber 29. The cone shape can follow well-known venturi-cone principles, in order to promote streamline, or less turbulent and therefore quieter flows on the inlet side of the valve.

Thus although the first consideration must be to assure enough flow through the valve at expected pressure differences P - P′, it is taught herein to set up an intermediate chamber, by means of an insert or an internal cross-sectional formation, in which an intermediate pressure P″ can subsist.

The cone shape provides progressively reducing cross-sections, somewhat smaller than that of the flow regulator, tapering to the diameter of restricted section 30.

The intermediate chamber may provide a venturi cone as in Fig 4, although surprisingly, it is usually found more effective for the chamber to be cylindrical as in Figs 2 and 3, whereby it is as large in volume as permitted by a given axial length, consistent with forming the grading-down in successive cross-sections.

This successive grading-down promotes the noise-damping or deadening of the invention, where such noise has been created at least in part by a flow regulator, particularly when followed by a main ON-OFF valve seat whose cross-section is generally axial of the fluid flow, thus involving multiple changes in direction of the main flow, e.g. round an effective barrier 31 (see Figs 1, 2 and 4). This pilot valve arrangement appears to derive particular benefit from the noise-reducing restricted passageway means of the invention.

A wall or flange 32 (See Fig 4 for convenience) may project vertically downwards from the body 2 and then curl inwardly horizontally at 33 to assist the clamping of the periphery 15 of the diaphragm. The vertical portion can be used to hold the periphery of either insert 18 (Fig 2) or 19, e.g. pressed against the flow regulator 17.

In order to maintain a substantial intermediate pressure P″, having regard to the final pressure P′ and to the mains pressure P, the silencer restrictive aperture 24 or 30 should be as small as possible. However, it should be large enough for passage of the standard or stablised flow rate at the lowest pressures likely to be encountered. In practice, a compromise may have to be reached, to cater for the highest and lowest likely incoming water pressures. Alternatively, the pressure-sensitive silencer mentioned above can be adopted, in which the aperture 24 or 30 would become larger or smaller in response to mains pressure changes, in unison with changes in the effective aperture of the flow stabiliser element 17.

As will be appreciated, the wall (31), when the valve is controlled open, forms a partial obstacle to fluid flow between an input port (3) and an output port (5), like the distortable flow regulator (17) also impeding the flow. The noise-reducing device 18 or 19 will be intermediate between the flow regulator and the wall obstacle (31). This wall (31) may provide part of the support for the diaphragm mounted valve seat, e.g. of a pilot valve. A further wall (32) may provide both a clamping face for the periphery of the noise-reducing insert (18 or 19) and a clamping surface (33) for the diaphragm periphery(15).

## Claims

1. A regulated flow channel with silencing, comprising an input conduit (4) connecting an inlet port (3) to an on-off valve (1) which conditions passage to an outlet port (5), a flow regulator (17) of the type responding to liquid supply pressure changes by progressively changing aperture size and thus opposing the effect of such pressure changes, and an insert (18) within the input conduit (4) between the flow regulator (17) and the on-off valve (1), which affects the cross-section of flow; characterized in that, to reduce a tendency of this type of flow regulator to generate noise, there is a restricted passage section (24; 30), provided by the insert, and a part of the insert having an intermediate passage (23) of a cross-section somewhat smaller than the cross-section of a passage (22) regulating the flow of the flow regulator, but not as small as said restricted passage (24;30) said intermediate passage (23) being disposed immediately dowstream of said regulating passage (22) and said somewhat smaller part providing an intermediate chamber (20;29), which is intermediate as regards both position and cross-sectional flow capacity, between said regulating passage (22) of the flow regulator and the restricted passage section (24; 30).

2. A flow channel according to Claim 1, wherein the insert (19) comprises a conical section, which tapers in the downstream direction to said restricted passage section (30).

3. A flow channel according to Claim 1, wherein the insert (18) has moderate-sized axial passage (23) somewhat smaller in cross-section than the regulating passage (22) of the pressure-responsive flow regulator to provide said intermediate chamber (20), and a yet smaller, restricted passage (3) located downstream of the moderate passage (23), the restricted passage being provided by a generally central boss portion (25) of the insert.

4. A flow channel according to Claim 3, wherein the boss portion (25) extends upstream from the downstream boundary (26A) of the insert, thereby creating an annular re-entrant blind channel (26), which is located around the boss portion (25) and, hence, also downstream of the moderate passage.

5. A flow channel according to Claims 3 or 4, wherein an upstream exterior portion (27) of the insert is tapered in the downstream direction.

6. A flow channel according to Claims 3, 4 or 5, in which the cross-section (24) of the restricted portion (30) is flared (28) in the downstream direction.

7. A flow channel according to any of Claims 1-6, in which a wall or flange (32) projects somewhat across the stream from the body (2) of the on-off valve (1), thereby to hold a peripheral part of the insert (18,19) pressed against the flow regulator; if desired an axial continuation (33) of the wall or flange (32) serving to assist clamping the periphery (15) of a diaphragm (11) of the on-off valve; which diaphragm extends along the general axis of liquid flow in said conduit.

8. A flow channel according to Claim 7, in which said axial continuation lies approximately adjacent said restricted passage.

9. A flow channel according to Claims 7 or 8, in which a seating flap (7) projects from the diaphragm (11) generally across the flow axis, towards a main seating (6), wherein said seating is provided in part by a member (31) also transverse to the flow axis and constituting a barrier effective, in conjunction with the flap (7), to provoke multiple directional changes or zig zagging in the main liquid flow.

10. A flow channel according to any of Claims 1-9, in which the material of the insert is pressure responsive, e.g. like that of the flow regulator, whereby said restrictive portion becomes more restrictive as the applied flowing liquid pressure rises.

**Patentansprüche**

1. Ein regulierter Stromkanal mit Geräuschdämpfung, der folgendes aufweist:
eine Eingangsleitung (4), die einen Einlaßanschluß (3) mit einem EIN/AUS-Ventil verbindet, das den Durchlaß zu einem Auslaßanschluß 5 beeinflußt, ein Stromregler (17) von der Art, die auf Flüssigkeitsversorgungsdruckänderungen anspricht durch fortschreitendes Verändern der Öffnungsgröße und somit der Wirkung solcher Druckänderungen entgegenwirkt, und einem Einsatz (18) innerhalb der Eingangsleitung (4) zwischen dem Stromregler (17) und dem EIN/AUS-Ventil (1), der den Strömungsquerschnitt beeinflußt;
dadurch gekennzeichnet, daß zum Vermindern der Neigung dieser Art von Stromreglern, Geräusch zu erzeugen, ein eingeschränkter Durchlaßabschnitt (24, 30) durch den Einsatz vorgesehen ist, und daß ein Teil des Einsatzes einen Zwischendurchlaß (23) aufweist mit einem Querschnitt, der etwas kleiner ist als der Querschnitt eines Durchlasses (22), der den Strom des Stromreglers reguliert, aber nicht so klein wie der eingeschränkte Durchlaß (24, 30), wobei der Zwischendurchlaß (23) unmittelbar stromabwärts von dem regulierenden Durchlaß (22) angeordnet ist und der etwas kleinere Teil eine Zwischenkammer (20, 29) vorsieht, welche sowohl bezüglich Position wie auch Querschnittsströmungskapazität zwischen dem regulierenden Durchlaß (22) des Stromreglers und dem eingeschränkten Durchlaßabschnitt (24, 30) liegt.

2. Stromkanal nach Anspruch 1, wobei der Einsatz (19) einen konischen Abschnitt aufweist, der sich in stromabwärtiger Richtung zu dem eingeschränkten Durchlaßabschnitt (30) hin verjüngt.

3. Stromkanal nach Anspruch 1, wobei der Einsatz (18) einen mittelgroßen oder moderat bemessenen axialen Durchlaß (23) aufweist, der im Querschnitt etwas kleiner ist als der regulierende Durchlaß (22) des druckansprechenden Stromreglers, um die mittlere Kammer (20) vorzusehen, und wobei der Einsatz (48) einen noch kleineren eingeschränkten Durchlaß (3) aufweist, der stromabwärts bezüglich des mittleren Durchlasses (23) angeordnet ist, wobei der eingeschränkte Durchlaß durch einen im allgemeinen zentralen vorstehenden Teil (25) des Einsatzes vorgesehen ist.

4. Stromkanal nach Anspruch 3, wobei der vorstehende Teil (25) sich stromaufwärts von der stromabwärtigen Begrenzung (26a) des Einsatzes erstreckt, wodurch er einen ringförmigen Wiedereintrittsblindkanal (26) bildet, der um den vorstehenden Teil (25) und daher auch stromabwärts bezüglich des mittelgroßen Durchlasses angeordnet ist.

5. Stromkanal nach Ansprüchen 3 oder 4, wobei ein stromaufwärtiger äußerer Teil (27) des Einsatzes sich in der stromabwärtigen Richtung verjüngt.

6. Stromkanal nach Ansprüchen 3, 4 oder 5, wobei der Querschnitt (24) des eingeschränkten Teils (30) sich in der stromabwärtigen Richtung erweitert.

7. Stromkanal nach einem der Ansprüche 1 bis 6, wobei eine Wand oder ein Flansch (32) von dem Körper (2) des EIN/AUS-Ventils (1) etwas in den Strom ragt, um dadurch einen Umfangsteil des Einsatzes (18, 19) gegen den Stromregler gepresst zu halten; wobei, falls gewünscht, ein axialer Fortsatz (33) der Wand oder des Flansches (32) dazu dient, das Klemmen des Umfangs (15) einer Membran (11) des EIN/AUS-Ventils zu unterstützen, wobei die Membran sich entlang der allgemeinen Achse des Flüssigkeitsstroms in der Leitung erstreckt.

8. Stromkanal nach Anspruch 7, wobei der axiale Fortsatz annäherungsweise benachbart zu dem eingeschränkten Durchlaß liegt.

9. Stromkanal nach Ansprüchen 7 oder 8, wobei eine Sitzklappe (7) von der Membran (11) allgemein quer zu der Strömungsachse vorsteht, und zwar zu einem Hauptsitz (6), wobei der Sitz teilweise durch ein Glied (31) vorgesehen ist, das auch quer zu der Strömungsachse angeordnet ist und eine Barriere bildet, die wirksam ist, in Verbindung mit der Klappe (7) mehrfache Richtungsänderungen oder Zickzackbewegungen des Hauptflüssigkeitsstroms hervorzurufen.

10. Stromkanal nach einem der Ansprüche 1 bis 9, wobei das Material des Einsatzes auf Druck anspricht, z. B. den des Stromreglers, wodurch der einschränkende Teil noch einschränkender wird, wenn der angelegte Strömungsflüssigkeitsdruck steigt.

## Revendications

1. Une conduite à débit régulé avec un "silencieux, comprenant une tubulure d'entrée (4) reliant un orifice d'entrée (3) à une valve "ouvert-fermé" (1) qui conditionne la liaison avec un orifice de sortie (5), un régulateur de débit (17) du type réagissant aux variations de pression du liquide d'alimentation en modifiant progressivement la taille d'un orifice et en s'opposant ainsi à l'effet desdites variations de pression, et un élément (18) inséré dans la tubulure d'entrée (4) entre le régulateur de débit (17) et la soupape "ouvert-fermé" (1) qui agit sur la section transversale de l'écoulement, caractérisée par le fait que pour réduire la tendance d'un tel type de régulateur de débit à donner naissance à du bruit, il est prévu un rétrécissement de la section (24, 30) offerte à l'écoulement par l'élément inséré, ainsi qu'une partie de l'élément inséré avec un orifice de passage intermédiaire (23) dont la section est un peu plus petite que celle d'un passage (22), constituant l'élément actif du régulateur de débit, mais pas aussi petite que celle du passage rétréci (24, 30), ledit passage intermédiaire étant disposé immédiatement en aval dudit passage régulateur du débit (22) et ladite partie légèrement plus petite constituant une chambre intermédiaire (20, 29) qui est "intermédiaire" tant du point de vue de sa position que de celui de sa section de passage offerte au débit, entre celle dudit passage actif (22) du régulateur de débit et la section de passage rétrécie (24, 30).

2. Une conduite d'écoulement selon la revendication 1, caractérisée par le fait que l'élément inséré (19) comprend une partie conique qui va en décroissant dans le sens de l'écoulement, vers le passage de section rétrécie (30).

3. Une conduite d'écoulement selon la revendication 1, caractérisée par le fait que l'élément inséré (18) comprend un passage axial (23) de taille modérée dont la section est un peu plus petite que celle de l'orifice de régulation (22) du régulateur de débit réagissant à la pression, pour constituer ladite chambre intermédiaire (20), et un passage restreint (23) situé en aval du passage de taille modérée (23), ledit passage rétréci étant prévu dans une partie centrale en forme de bossage (25) de l'élément inséré.

4. Une canalisation d'écoulement selon la revendication 3, caractérisée par le fait que la partie formant bossage (25) s'étend en direction de l'amont à partir de la partie (26A) de l'élément inséré, qui limite celui-ci du côté aval, créant ainsi un canal annulaire en retour (26), disposé autour de la partie formant bossage (25), en aval par conséquent, lui aussi, du passage de taille modérée.

5. Une canalisation d'écoulement selon la revendication 3 ou 4 caractérisée par le fait qu'une partie extérieure (27), côté amont de l'élément inséré, présente une forme conique en direction de l'aval.

6. Une canalisation d'écoulement selon l'une quelconque des revendications 3, 4 ou 5, caractérisée par le fait que la section transversale (24) de la partie rétrécie (30) est évasée (28) en direction de l'aval.

7. Une canalisation d'écoulement selon l'une quelconque des revendications de 1 à 6, caractérisée par le fait que dans ladite canalisation une paroi ou un rebord (32) est prévu quelque peu en saillie par rapport au corps (2) de la valve "ouvert/fermé" (1), ceci afin de maintenir une partie périphérique de l'élément inséré (18,19) pressé contre le régulateur de débit ; si on le désire un prolongement axial (33) de la paroi ou du rebord (32) peut être prévu servant à contribuer au bridage de la périphérie (15) d'un diaphragme (11) de ladite valve "ouvert/fermé" ; ce diaphragme s'étendant le long de l'écoulement du liquide dans ladite canalisation d'écoulement.

8. Une canalisation d'écoulement selon la revendication 7, dans laquelle ledit prolongement axial est approximativement adjacent audit passage rétréci.

9. Une canalisation d'écoulement selon l'une des revendications 7 ou 8, caractérisée par le fait qu'un clapet à siège (7) est disposé en saillie sur le diaphragme (11) perpendiculairement à l'axe général d'écoulement, en direction d'un siège principal (6), ledit siège étant constitué en partie par un élément (31) également transversal par rapport à l'axe de l'écoulement et constituant une barrière efficace, conjointement avec le clapet (7), pour provoquer de multiples changements de direction ou imposer un parcours en zig-zag à l'écoulement principal du liquide.

10. Un canal d'écoulement selon l'une quelconque des revendications de 1 à 9 caractérisé par le fait que les éléments insérés sont réalisés en un matériau réagissant à la pression tel que celui du régulateur de débit, de manière que cette partie restrictive devienne encore plus restrictive lorsque la pression du liquide qui s'écoule, appliquée au système, augmente.

Fig.1.

Fig.2.

*Fig.3.*

*Fig.4.*